# EUROPEAN PATENT APPLICATION

(11) **EP 2 833 348 A1**
(43) Date of publication of application: **04.02.2015**
(21) Application number: 14176221.1
(22) Date of filing: 08.07.2014
(51) Int. Cl.: G09G 3/00, H04N 5/765, H04N 21/00, G09G 5/00, G09G 5/12, H04L 29/06

(54) **Multiple-format multimedia interface module**

(30) Priority: 29.07.2013 TW 102127179
(71) Applicant: Algoltek, Inc., Hsinchu County 30274 (TW)
(72) Inventor: Zhang, Dalee, 30274 Hsinchu County (TW); Chan, Sheng-Chieh, 30274 Hsinchu County (TW); Lan, Shih-Min, 30274 Hsinchu County (TW)
(74) Representative: Lang, Christian

(57) **Abstract**

The present invention is a multiple-format multimedia interface module (100), comprising a first port (10), a circuit module (20), a first transmission line (30), a second port (40), and a second transmission line (50). The multiple-format multimedia interface module (100) connects a mobile device (60) with a display device (70) conveniently, and may bidirectionally transmit signals between a transmitter end with multiple signal formats of MHL, MyDP, and USB and a receiver end with a single signal format of HDMI or bidirectionally transmit signals between a transmitter end with a single signal format and a receiver end with multiple signal formats.

## Description

### Field of the Invention

The invention relates to a multimedia interface module, and more particularly, to a multiple-format multimedia interface module that may connect a mobile device with a display device.

### Background of the Invention

Due to the popularization of mobile devices in recent years, the needs for watching or saving multimedia on mobile devices have substantially increased. Formats of multimedia presently used on mobile devices mainly include Mobile High-Definition Link (MHL) and Mobility DisplayPort (MyDP), and Micro-USB ports are usually employed as the interface port.

On the other hand, the development of liquid crystal display technologies has also largely reduced the prices of display devices, and the applications and demands have also increased. However, most multimedia interfaces of display devices of the present day use the 19-pin High-Definition Multimedia Interface (HDMI) format and HDMI port. If multimedia is to be bidirectionally transmitted between a mobile device and a display device, issues of signal format incompatibilities may occur.

In order to facilitate the bidirectional transmission of MHL, MyDP, or USB signals with different formats with HDMI signals, a multiple-format multimedia interface module that may utilize present mobile device ports and display device ports and is cost effective, light, and convenient is seriously required.

### Summary of the Invention

The present invention is a multiple-format multimedia interface module, comprising a first port, a circuit module, a first transmission line, a second port, and a second transmission line. The multiple-format multimedia interface module connects a mobile device with a display device conveniently, and may bidirectionally transmit signals between a transmitter end with multiple signal formats and a receiver end with a single signal format or between a transmitter end with a single signal format and a receiver end with multiple signal formats.

The invention provides a multiple-format multimedia interface module, comprising: a first port, which is a Micro-USB port, bidirectionally transmitting a first signal, wherein the first signal is a Mobile High-Definition Link (MHL) signal, Mobility DisplayPort (MyDP) signal, or Universal Serial Bus (USB) signal; a circuit module, converting the first signal into a second signal or converting the second signal into the first signal, wherein the second signal is a High-Definition Multimedia Interface (HDMI) signal; a first transmission line, connecting the first port and the circuit module; a second port, which is a HDMI port, bidirectionally transmitting the second signal; and a second transmission line, connecting the circuit module and the second port.

The implementation of the present invention may at least achieve the following improvements:
(1) present mobile device ports and display device ports may be used without requiring extra equipment or cost;
(2) transmissions between a transmitter end with multiple signal formats and a receiver end with a single signal format or between a transmitter end with a single signal format and a receiver end with multiple signal formats may be implemented; and
(3) achieves multiple-format multimedia transmission that is cost effective, light, and convenient.

The detailed features and advantages of the invention are described in the detailed description of the invention for those skilled in the art to understand, make, and use the invention and to easily understand the purposes and advantages of the invention according to the detailed description, claims, and drawings.

### Brief Description of the Drawings

The invention as well as a preferred mode of use, further objectives and advantages thereof will be best understood by reference to the following detailed description of illustrative embodiments when read in conjunction with the accompanying drawings, wherein:
FIG. 1 is a schematic of a multiple-format multimedia interface module according to an embodiment of the invention;
FIG. 2 is a schematic of the signal transmission of the multiple-format multimedia interface module according to an embodiment of the invention;
FIG. 3 is a schematic of a multiple-format multimedia interface module according to another embodiment of the invention; and
FIG. 4 is a schematic of a multiple-format multimedia interface module according to still another embodiment of the invention.

### Detailed Description of the Invention

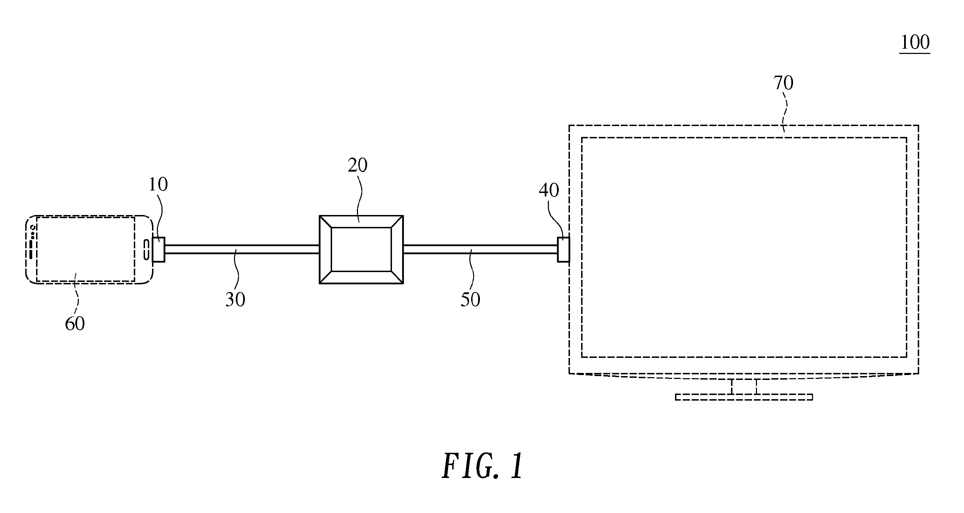

FIG. 1 shows an embodiment of the multiple-format multimedia interface module 100, comprising: a first port 10, a circuit module 20, a first transmission line 30, a second port 40, and a second transmission line 50. The circuit module 20 is connected to the first port 10 and the second port 40 via the first transmission line 30 and the second transmission line 50, respectively, and the first port 10 and the second port 40 are connected to the mobile device 60 and the display device 70, respectively.

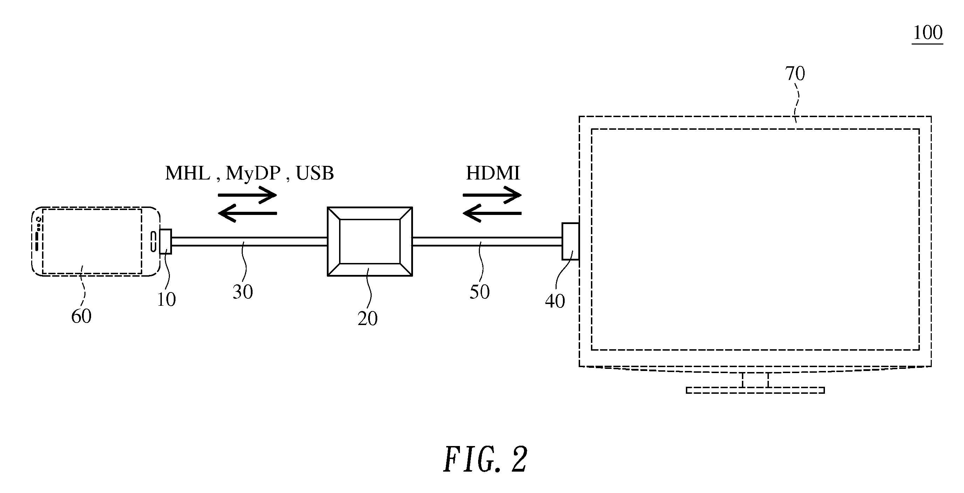

As shown in FIG. 1 and FIG. 2, the first port 10 may be a Micro-USB port, and the first port 10 may be electrically connected to the mobile device 60 to bidirectionally transmit a first signal, wherein the first signal may be a MHL signal, MyDP signal, or USB signal. In other words, the first port 10 in FIG. 1 may allow multimedia signals of multiple formats to be bidirectionally transmitted via a Micro-USB port.

FIG. 2 shows a schematic of the embodiment of the bidirectional transmission of a MHL signal, MyDP signal, or USB signal via the first port 10.

As shown in FIG. 1 and FIG. 2, the circuit module 20 converts the first signal into a second signal or converts the second signal into the first signal, wherein the second signal is a HDMI signal. That is to say, the circuit module 20 converts between the signal formats of the MHL signal, MyDP signal, or USB signal and the HDMI signal.

As also shown in FIG. 1 and FIG. 2, the first transmission line 30 connects the first port 10 and the circuit module 20; the mobile device 60 transmits the MHL signal, MyDP signal, or USB signal to the circuit module 20 via the first port 10 and the first transmission line 30, or receives the MHL signal, MyDP signal, or USB signal from the circuit module 20.

As shown in FIG. 1 and FIG. 2, the second port 40 may be a HDMI port that bidirectionally transmits the second signal. The second port 40 is connected with the display device 70 and inputs the HDMI signal to the display device 70 or outputs the HDMI signal from the display device 70.

As also shown in FIG. 1 and FIG. 2, the second transmission line 50 connects the circuit module 20 and the second port 40. In other words, the second transmission line 50 and the second port 40 connect the circuit module 20 with the display device 70 and bidirectionally transmits the HDMI signal between the circuit module 20 and the display device 70.

By the embodiment of the multiple-format multimedia interface module 100 shown in FIG. 1 and FIG. 2, the mobile device 60 may transmit multimedia signals of multiple formats to a display device 70 with a port of a single format, and the display device 70 with a port of a single format may also transmit multimedia to the mobile device with a port of multiple signal formats. In other words, the multiple-format multimedia interface module 100 of the embodiment may bidirectionally transmit signals between a transmitter end with multiple signal formats and a receiver end with a single signal format, and may bidirectionally transmit signals between a transmitter end with a single signal format and a receiver end with multiple signal formats.

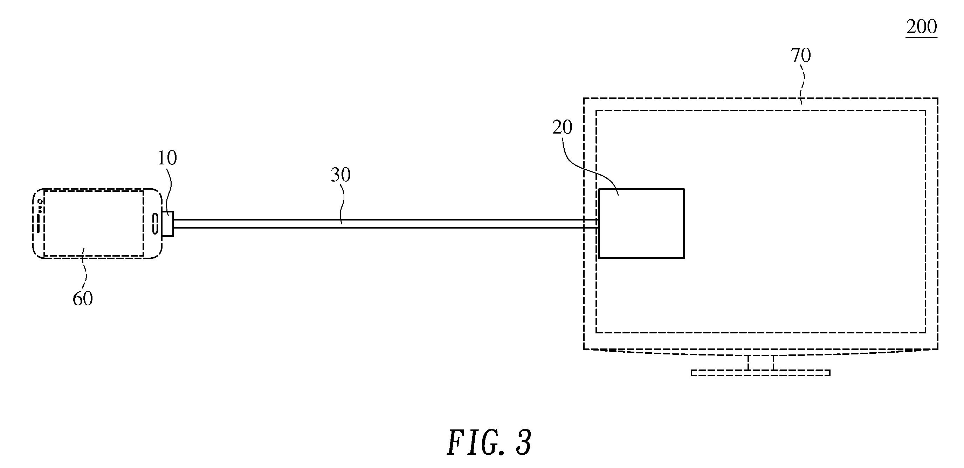

FIG. 3 shows another embodiment of the multiple-format multimedia interface module 200, wherein the circuit module 20 is fixed within and electrically connected to the display device 70. By the connection of the multiple-format multimedia interface module 200 shown in FIG. 3, the display device 70 may be electrically connected with the mobile device 60 via the first transmission line 30 and the first port 10 only, which simplifies the manufacture, storage, or usage of connectors.

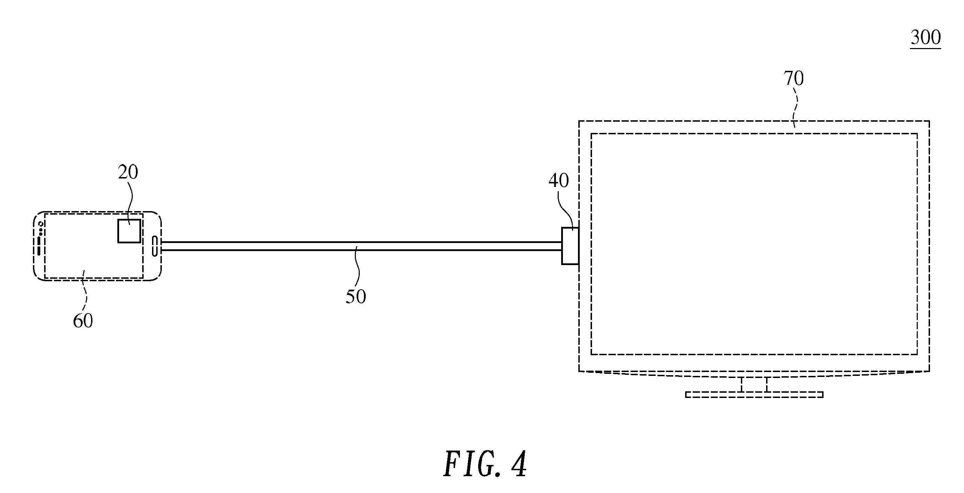

FIG. 4 shows still another embodiment of the multiple-format multimedia interface module 300, wherein the circuit module 20 is fixed within and electrically connected to the mobile device 60. By the connection of the multiple-format multimedia interface module 300 shown in FIG. 4, the mobile device 60 may be electrically connected with the display device 70 via the second transmission line 50 and the second port 40 only, which also simplifies the manufacture, storage, or usage of connectors.

For the multiple-format multimedia interface modules 100, 200, or 300 shown in FIG. 1 to FIG. 4, the display device 70 may be a television, monitor, or projector device with a HDMI port in actual applications.

The embodiments described above are intended only to demonstrate the technical concept and features of the present invention so as to enable a person skilled in the art to understand and implement the contents disclosed herein. It is understood that the disclosed embodiments are not to limit the scope of the present invention. Therefore, all equivalent changes or modifications based on the concept of the present invention should be encompassed by the appended claims.

## Claims

1. A multiple-format multimedia interface module (100), comprising:
a first port (10), which is a Micro-USB port, bidirectionally transmitting a first signal, wherein the first signal is a Mobile High-Definition Link (MHL) signal, Mobility DisplayPort (MyDP) signal, or Universal Serial Bus (USB) signal;
a circuit module (20), converting the first signal into a second signal or converting the second signal into the first signal, wherein the second signal is a High-Definition Multimedia Interface (HDMI) signal;
a first transmission line (30), connecting the first port (10) and the circuit module (20);
a second port (40), which is a HDMI port, bidirectionally transmitting the second signal; and
a second transmission line (50), connecting the circuit module (20) and the second port (40).

2. The multiple-format multimedia interface module (100) as claimed in claim 1, wherein the first port (10) is electrically connected with a mobile device (60) and the second port (40) is electrically connected with a display device (70).

3. The multiple-format multimedia interface module (100) as claimed in claim 2, wherein the circuit module (20) is fixed within and electrically connected to the display device (70), and wherein the display device (70) is electrically connected with the mobile device (60) via the first transmission line (30) and the first port (10).

4. The multiple-format multimedia interface module (100) as claimed in claim 2, wherein the circuit module (20) is fixed within and electrically connected to the mobile device (60), and wherein the mobile device (60) is electrically connected with the display device (70) via the second transmission line (50) and the second port (40).

5. The multiple-format multimedia interface module (100) as claimed in claim 2, wherein the display device (70) is a television, monitor, or projector device.

6. The multiple-format multimedia interface module (100) as claimed in claim 3, wherein the display device (70) is a television, monitor, or projector device.

7. The multiple-format multimedia interface module (100) as claimed in claim 4, wherein the display device (70) is a television, monitor, or projector device.
